(19) Europäisches Patentamt
European Patent Office
Office européen des brevets

(11) **EP 4 611 277 A1**

(12) **EUROPEAN PATENT APPLICATION**

(43) Date of publication:
**03.09.2025 Bulletin 2025/36**

(21) Application number: **24160706.8**

(22) Date of filing: **29.02.2024**

(51) International Patent Classification (IPC):
***H04B 10/079*** (2013.01)   ***H04B 10/272*** (2013.01)
***H04Q 11/00*** (2006.01)

(52) Cooperative Patent Classification (CPC):
**H04B 10/272; H04B 10/07955; H04B 10/0799;
H04Q 11/0067;** H04Q 2011/0084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nokia Solutions and Networks Oy
02610 Espoo (FI)**

(72) Inventors:
• **Verplaetse, Michiel
2018 Antwerpen (BE)**
• **Lefevre, Yannick
2018 Antwerpen (BE)**
• **Breyne, Laurens
2018 Antwerpen (BE)**

(74) Representative: **IP HILLS NV
Bellevue 5/501
9050 Gent-Ledeberg (BE)**

(54) **OPTICAL LINE TERMINAL WITH ADJUSTABLE POWER CONSUMPTION**

(57)    Example embodiments describe an optical line terminal (110), OLT, configured to communicate with optical network units (131, 132, 133), ONUs, by means of an optical distribution network (120), ODN, in a passive optical network (100), PON; wherein the OLT comprises one or more transmitter circuitries (111) configured to transmit a downstream optical signal (115) to the ONUs according to transmitter settings that determine a power consumption of the OLT; and wherein the OLT further comprises a controller (112) configured to adjust the power consumption of the OLT by adjusting one or more of the transmitter settings (145) while respecting minimal channel qualities of the downstream optical signal between the OLT and the respective ONUs.

Fig. 1

EP 4 611 277 A1

**Description**

**Field of the Invention**

Various example embodiments relate to an optical line terminal, OLT, with an in-service adjustable power consumption and a computer-implemented method for adjusting the power consumption of an OLT in a passive optical network, PON.

**Background of the Invention**

In passive optical networks, PONs, an optical line terminal, OLT, communicates with a plurality of optical network units, ONUs, over an optical distribution network, ODN. A margin is typically provided to account for various unexpected losses and impairments that can occur in the optical fibre links or channels between the OLT and the respective ONUs. The margin ensures that the channel quality of the downstream optical signal remains above a minimum quality under various operating conditions, including temperature variations, aging of optical components, and other environmental factors. A sufficient margin thus allows maintaining the network's reliability and performance under various operating conditions.
An OLT comprises optics of a certain optical budget class characterized by a predetermined optical output power, e.g. optical budgets classes N1, N2, and E2 in XGS-PON. Network operators typically plan and design the deployment of the ODN to optimize cost while meeting some performance constraints within the available OLT budget classes. Predicting these constraints accurately before deployment of the ODN is a challenge as the PON may be used differently than a typical deployment or than expected which changes the constraints the PON was designed for. For example, the number of homes that end up connecting to the ODN can be less than expected or component specifications may be better than expected. As a result, excess margins may be present in the PON resulting in excessive or futile power consumption of the OLT.
In an attempt to reduce excess margins, network operators could select OLT optics with the lowest optical output power that still meet the constraints of the ODN during the planning and designing phase of the ODN, i.e. before the PON is put in service. While in service, if the margin turns out to be insufficient or excessive, the network operator could manually swap the OLT optics to another budget class to increase or decrease the margin. This has the problem that it disrupts the service of the PON, it is labour intensive, and it is costly. It is a further problem that only a limited set of optical budget classes are available to choose from which have fixed optical output power increments, limiting the adaptability of the power consumption.

**Summary of the Invention**

The scope of protection sought for various embodiments of the invention is set out by the independent claims. The embodiments and features described in this specification that do not fall within the scope of the independent claims, if any, are to be interpreted as examples useful for understanding various embodiments of the invention.
Amongst others, it is an object of embodiments of the invention to adjust the power consumption of an optical line terminal, OLT, while the OLT is in service without disrupting the PON service.
This object is achieved, according to a first example aspect of the present disclosure, by an optical line terminal, OLT, configured to communicate with optical network units, ONUs, by means of an optical distribution network, ODN, in a passive optical network, PON; wherein the OLT comprises one or more transmitter circuitries configured to transmit a downstream optical signal to the ONUs according to transmitter settings that determine a power consumption of the OLT; and wherein the OLT further comprises a controller configured to adjust the power consumption of the OLT by adjusting one or more of the transmitter settings while respecting minimal channel qualities of the downstream optical signal between the OLT and the respective ONUs.
The one or more transmitter circuitries may for example be, amongst others, a laser diode, a semiconductor optical amplifier, adjustable OLT optics, an equalizer circuitry, a thermo-electric cooler, or an optical modulator. These circuitries may, for example, be included within an optical transmitter or an optical transceiver of the OLT. The transmitter circuitries are configured to transmit a downstream optical signal to the ONUs according to transmitter settings. The characteristics of the downstream optical signal transmitted by the OLT are thus determined by the transmitter settings of the respective transmitter circuitries, e.g. the bias of a laser diode or the bias of a semiconductor optical amplifier. The respective transmitter circuitries may have one or more controllable transmitter settings.
As the optical signal travels over the ODN it incurs losses, e.g. fibre attenuation, connector losses, and splitter loss, which affect the channel quality of the downstream optical signal between the OLT and the respective ONUs. The channel quality of the downstream optical signal may refer to the measure of how effectively and reliably data can be transmitted over the optical fibre between the OLT and the respective ONUs. A channel quality may, for example, be expressed as a bit error rate, BER, or a signal to noise ratio, SNR, metric. The transmitter settings determine or at least contribute to the channel qualities between the OLT and the respective ONUs. The transmitter settings may influence signal characteristics of the downstream optical signal, e.g. power, error rate, or bandwidth. It will be apparent that the transmitter settings do not influence the modulation of the downstream optical signal, i.e. the transmitter settings do not include the modulation order, baud rate, or forward error correction that is used by the OLT.

The controller is configured to adjust, when the OLT is in service, one or more of the transmitter settings. In doing so, the power consumption of the OLT is adjusted as the transmitter settings determine or at least contribute to the power consumption of the OLT. This allows reducing the downstream margins without substantially negatively affecting the channel quality between the OLT and the respective ONUs as at least a minimum downstream channel quality is maintained, i.e. the minimal channel qualities are respected.

This allows reducing the power consumption of the OLT according to the available excess margins in the PON while the OLT is in service, i.e. without disrupting the service of the PON. This has the advantage that it is cost-effective and not labour intensive, e.g. compared to manually swapping the OLT optics to another budget class. It is a further advantage that the downstream margin can be reduced in a more modular manner which improves the adaptability of the OLT power consumption, as adjustments are not limited to a set of predetermined increments/decrements in optical output power associated with the different optical budget classes. It is a further advantage that power savings can be increased beyond the power savings provided by selecting the lowest available optical budget class. It is a further advantage that downstream margins can be adjusted without adjusting the upstream margins, contrary to changing OLT optics. This can especially be advantageous where a large discrepancy in the margins is present in the upstream and downstream.

According to an example embodiment, the controller may further be configured to adjust the power consumption of the OLT while the OLT is in service.

The OLT is 'in service' when the OLT can actively function and provide services to subscribers or end-users. In service may thus refer to the OLT being operational, connected to the network, and capable of transmitting and receiving data traffic to and from ONUs.

According to an example embodiment, the controller may further be configured to adjust one or more of the transmitter settings based on PON deployment information indicative for the channel quality of one or more channels between the OLT and the respective ONUs.

PON deployment information may include information related to the optical power losses incurred by an optical downstream signal within the ODN, information related to the ONU receiver sensitivities within the PON, information related to a topology or configuration of the PON, or any other information that has an effect on the channel quality between the OLT and one or more of the ONUs. In other words, the channel quality between the OLT and an ONU is at least partially determined by the PON deployment information. This PON deployment information can allow the controller to estimate or approximate the downstream margin at one or more ONUs.

According to an example embodiment, the controller may be further configured to obtain PON deployment information as a manual input and/or as a reported input from the respective ONUs.

The PON deployment information may, for example, be provided to the controller as a manual input by a network operator. The controller may then adjust the power consumption of the OLT by adjusting one or more of the transmitter settings while respecting minimal channel qualities based on the provided PON deployment information. This may be referred to as a static configuration of the transmitter settings, as the one or more transmitter settings are adjusted when the controller obtains PON deployment information as an input.

The controller may further be configured to keep at least a minimum margin for maintaining the network's reliability and performance under various operating conditions. This avoids that the margins are lowered too much which would leave no buffer for compensating, for example, the aging of the ODN, temperature variations in the ODN, or disturbances in the ODN. The network operator may further provide this minimal channel quality or minimal margin as manual input to the controller that has to be kept for maintaining the network's reliability and performance under various operating conditions.

Alternatively or complementary, the PON deployment information may be reported to the controller by the respective ONUs, i.e. as reported input. This has the advantage that the PON deployment information can be provided more frequently.

According to an example embodiment, the PON deployment information may include one or more optical powers of a downstream optical signal at one or more ONUs; one or more properties of the ODN; one or more bit error rates, BERs, of the respective ONUs; one or more signal-to-noise ratios, SNRs, of the respective ONUs; and/or an optical power of an upstream optical signal received at the OLT.

The one or more properties of the ODN may, for example, include a split factor of the ODN and a fibre reach of the ODN. The optical power of a downstream optical signal may, for example, be measured by a technician or operator and subsequently be provided to the controller as manual input. Alternatively or complementary, the optical power of a downstream optical signal may be measured by the respective ONUs and reported to the controller, e.g. by including the measurement in the upstream optical signals to the OLT. Similarly, the BER and/or SNR may be reported to the controller by the respective ONUs, and/or may be provided to the controller as manual input by a technician. Alternatively or complementary, the PON deployment information may include an optical power of an upstream optical signal received at the OLT. To this end, the OLT or the controller may be configured to determine or measure the optical power of a received upstream optical signal from one or more ONUs.

Additional information may be included in the PON deployment information such as, for example, one or more ONU receiver sensitivities and/or the transmission power level of an upstream optical signal transmitted by an ONU. This additional information may be reported within an upstream optical signal or provided as a manual input to the controller. Alternatively, such additional information may be stored in an accessible memory of the controller.

According to an example embodiment, the controller may further be configured to track and update PON deployment information.

This may further be referred to as a quasi-static configuration of the transmitter settings or a dynamic configuration of the transmitter settings, as the controller may be configured to automatically adapt the one or more transmitter settings based on the latest PON deployment information that is obtained. This dynamic configuration of the transmitter settings can allow reducing the downstream margins more compared to static configuration of the transmitter settings as only a limited margin, or even no margin, has to be provided for maintaining the network's reliability and performance under various operating conditions. Dynamic configuration of the transmitter settings can thus further increase the power savings of the OLT. This has the further advantage that it requires no manual intervention from a network operator.

According to an example embodiment, the controller may further be configured to identify transmitter settings that result in a target channel quality for a lowest channel quality between the OLT and an ONU within the PON and/or a target power consumption of the OLT by iteratively adjusting the one or more transmitter settings and by monitoring the PON deployment information.

The controller may be configured to adjust one or more transmitter settings in, for example, fixed decrements, fixed increments, according to a golden bisection algorithm, or by means of reinforcement learning. The target reduction may, for example, be a desired reduction in power consumption, a desired power consumption, or a desired lowest channel quality between the OLT and an ONU within the PON. The target reduction may be defined quantitatively. Alternatively, the target reduction may correspond to optimizing the performance and power consumption of the OLT. This can, for example, be achieved by the controller by gradually adjusting one or more transmitter settings until a lower limit is reached for a channel quality metric of any ONU in the PON, e.g. a reported BER of the ONUs. In doing so, a maximum power can be saved while maintaining the minimum channel quality.

According to an embodiment, the controller may be configured to adjust one or more transmitter settings such that a lowest channel quality between the OLT and an ONU within the PON is equal to a predetermined channel quality.

The controller may thus be configured to set one or more transmitter settings such that the channel quality between the OLT and the ONU with the lowest channel quality within the PON has a preset value. The predetermined channel quality may be a minimum channel quality for maintaining the network's reliability and performance under various operation conditions, e.g. aging of the ODN, temperature variations in the ODN, or disturbances in the ODN. This allows saving a maximum amount of power consumption of the OLT while ensuring that each ONU in the PON receives the downstream optical signal with a sufficient quality to maintain the network's reliability and performance.

According to an embodiment, adjusting one or more transmitter settings comprises at least one of adjusting a bias of a laser diode; adjusting a bias of a semiconductor optical amplifier, adjusting a bias of OLT optics; adjusting a transmission power level of the downstream optical signals; adjusting an operational state of an equalizer circuitry; adjusting a driver swing; and/or adjusting an optical modulation amplitude of an optical modulator circuitry..

Adjusting some of these transmitter settings may result in an adjustment of the average optical power level of the downstream optical signal as transmitted by the OLT, i.e. the average transmission power level. For example, amongst others, adjusting the bias of a laser diode, adjusting the bias of a semiconductor optical amplifier, or setting a transmission power level of the downstream optical signal directly result in an adjustment of the average optical transmission power level of the OLT. This may result in an adjustment of the downstream optical power margin. The downstream optical power margin may refer to the difference between the received power level of the downstream optical signal at an ONU and the ONU receiver sensitivity, i.e. the minimum optical power level required by the ONU's receiver to reliably detect and demodulate incoming optical signals.

According to an embodiment, the controller is further configured to adjust one or more transmitter settings as to temporarily increase downstream optical power margins during an interval.

Adjusting the one or more transmitter settings to reduce the power consumption of the OLT can result in a reduction of the downstream optical power margins between the OLT and the respective ONUs, i.e. when the transmission power level of the downstream optical signals is reduced due to the adjusted transmitter settings. The reduced downstream optical power margin may not be sufficient to allow unsynchronized ONUs to perform activation to join the PON. To this end, the controller may be configured to temporarily increase the downstream optical power margins during an interval to allow unsynchronized ONUs to perform activation during the interval. Such an interval may be provided by the controller, for example, upon preregistration of a newly installed ONU, upon predetermined moments during the day, at predetermined intervals, after an already registered ONU drops out to ensure resyncing, and/or after a rogue ONU has been detected. Alternatively or complementary, such an interval of increased downstream optical power margin may further be provided to prevent expected upcoming failure events.

According to an embodiment, the OLT may further comprise one or more receiver circuitries configured to receive upstream optical signals from the respective ONUs according to receiver settings that determine the power consumption of the OLT; and wherein the controller is further configured to adjust the power consumption of the OLT while the OLT is in service by adjusting one or more of the receiver settings while respecting minimal channel qualities of the upstream optical signals between the respective ONUs and the OLT.

The one or more receiver circuitries may, for example, be a transimpedance amplifier circuitry, an equalizer circuitry, or a decoder circuitry. These circuitries may, for example, be included within an optical receiver or and optical transceiver of the OLT. The transmitter circuitries are configured to receive and decode an upstream optical signal from the ONUs according to transmitter settings. The respective receiver circuitries may have one or more controllable receiver settings.

The controller may thus further be configured to adjust one or more of the receiver settings. In doing so, the power consumption of the OLT is adjusted as the receiver settings determine or at least contribute to the power consumption of the OLT. This allows reducing the upstream margins without negatively affecting the channel qualities between the respective ONUs and the OLT as at least a minimum upstream channel quality is maintained, i.e. the minimal channel qualities are respected.

This can, for example, be achieved by reducing the maximum semiconductor optical amplifier gain, adopt the photodiode bias, reducing transimpedance amplifier power consumption, disabling the equalization fully or partially, and reducing the maximum amount of decoder iterations. This can allow further reducing the power consumption of the OLT without disrupting the service of the PON.

According to a second aspect, the invention relates to a an optical line terminal, OLT, configured to communicate with optical network units, ONUs, by means of an optical distribution network, ODN, in a passive optical network, PON; wherein the OLT comprises one or more receiver circuitries configured to receive upstream optical signals from the respective ONUs according to receiver settings that determine the power consumption of the OLT; and wherein the OLT further comprises a controller configured to adjust the power consumption of the OLT by adjusting one or more of the receiver settings while respecting minimal channel qualities of the upstream optical signals between the respective ONUs and the OLT.

According to an example embodiment, the controller may further be configured to adjust the power consumption of the OLT while the OLT is in service.

According to a third aspect, the invention relates to a computer-implemented method for reducing power consumption of an OLT, wherein the OLT is configured to communicate with optical network units, ONUs, by means of an optical distribution network, ODN, in a passive optical network, PON; wherein the OLT comprises one or more transmitter circuitries configured to transmit a downstream optical signal to the ONUs according to transmitter settings that determine a power consumption of the OLT; the computer-implemented method comprising, while the OLT is in service:

- obtaining PON deployment information indicative for the channel quality of one or more channels between the OLT and the respective ONUs; and
- adjusting, based on the PON deployment information, one or more transmitter settings that adjust the power consumption of the OLT while respecting minimal channel qualities of the downstream optical signal between the OLT and the respective ONUs

According to a fourth aspect, the invention relates to a data processing system configured to perform the computer-implemented method according to the third aspect.

According to a fifth aspect, the invention relates to a computer program product comprising computer-executable instructions which, when the program is executed by a computer, cause the computer to perform the computer-implemented method according to the third aspect.

**Brief Description of the Drawings**

Fig. 1 shows a schematic block diagram of an example passive optical network, PON, comprising an optical line terminal, OLT, with a controller configured to adjust the power consumption of the OLT while the OLT is in service according to example embodiments;

Fig. 2 shows an example embodiment of an OLT comprising a controller configured to adaptively adjust the one or more transmitter settings based on reported PON deployment information and/or manually inputted PON deployment information;

Fig. 3 shows an example embodiment of an OLT comprising a controller further configured to adjust the power consumption of the OLT while the OLT is in service by adjusting one or more receiver settings of one or more receiver circuitries of the OLT;

Fig. 4 shows steps according to an example embodiment of a computer-implemented method for reducing the power consumption of an OLT while in service by adjusting one or more transmitter settings; and

Fig. 5 shows an example of a suitable computing system enabling to implement embodiments of the computer-implemented method for reducing the power consumption of an OLT.

**Detailed Description of Embodiment(s)**

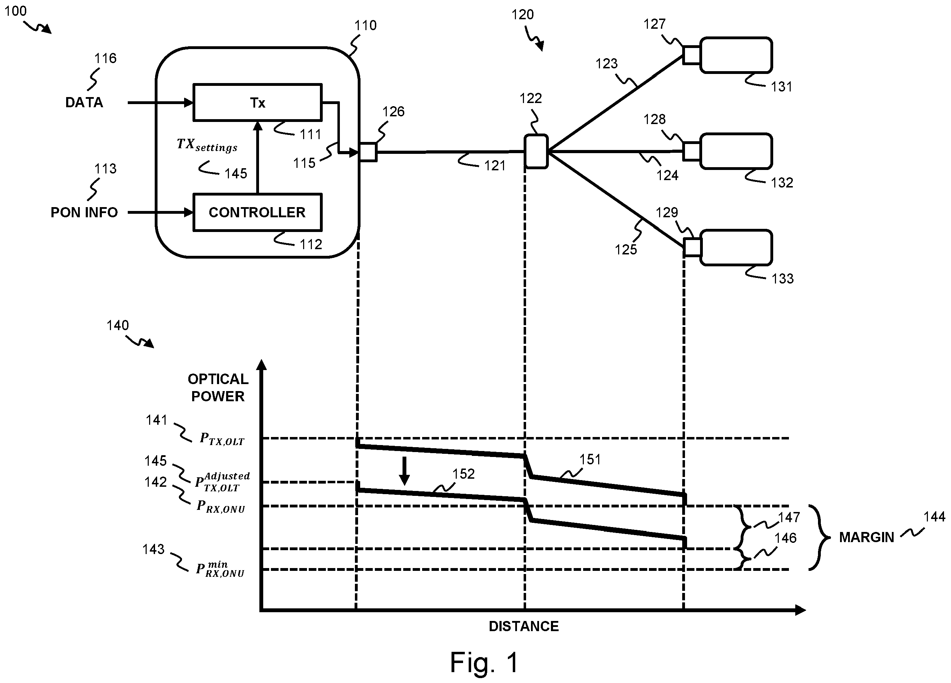

Fig. 1 shows a schematic block diagram of an example passive optical network, PON 100 comprising an optical line terminal, OLT, 110 according to example embodiments. OLT 110 is connected to a plurality of optical network units, ONUs, 131, 132, 133 via an optical distribution network, ODN 120. The ODN 120 may have a tree structure comprising an optical feeder fibre 121, one or more passive optical splitters/multiplexors 122, and a plurality of optical distribution fibres or drop fibres that connect the splitter/multiplexor 122 to the respective ONUs 131, 132, 133. In the downstream, the passive optical splitter/multiplexor 122 splits a downstream optical signal coming from the OLT 110 into lower power optical signals for the connected ONUs 131, 132, 133, while in the upstream direction, the passive optical splitter/multiplexor 122 multiplexes the optical signals coming from the connected ONUs 131, 132, 133 into a burst signal for the OLT 110. In this example, the OLT 110 is connected to three ONUs 131, 132, 133, however, the OLT 110 may be connected to fewer or more ONUs.

The passive optical network 100 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical network 100 may implement time-division multiplexing, TDM, or time- and wavelength-division multiplexing, TWDM.

The OLT 110 further comprises one or more transmitter circuitries 111, e.g. a laser diode driver, a modulator circuitry, or a power control circuitry. These circuitries may, for example, be included within an optical transmitter or an optical transceiver of the OLT. The transmitter circuitries 111 are configured to transmit data 116 within a downstream optical signal 115 to the ONUs 131, 132, 133 according to transmitter settings while the OLT is in service. The OLT is 'in service' when the OLT can actively function and provide services to subscribers or end-users. In service may thus refer to the OLT being operational, connected to the network, and capable of transmitting and receiving data traffic to and from ONUs. The characteristics of the downstream optical signal 115 transmitted by the OLT 110 may thus be determined by the transmitter settings of the respective transmitter circuitries 111, e.g. the bias of a laser diode or the bias of a semiconductor optical amplifier. The respective transmitter circuitries 111 may have one or more controllable transmitter settings.

As the optical signal 115 travels over the ODN 120 it incurs optical power losses, as illustrated by 151, which affect the channel quality of the downstream optical signal between the OLT 110 and the respective ONUs 131, 132, 133. The aforementioned transmitter settings of the one or more transmitter circuitries 111 determine, amongst other characteristics, the optical power level of the downstream optical signal 115 as transmitted by the OLT 110, i.e. the transmission power level 141. The downstream optical signal incurs connector losses and splicer losses at connections 126, 127, 128, 129 along its path. As the optical signal travels through the fibre optic cables 121, 123, 124, 125 it also incurs attenuation, where the signal strength decreases over distance due to absorption and scattering of light in the fibres 121, 123, 124, 125. This loss depends on the length and quality of the fibre. Another substantial optical power loss occurs at the splitter/-multiplexor 122 due to splitting of the optical signal, i.e. the splitter loss.

As a result of these losses, the downstream optical signal only possesses a portion of the initially transmitted optical power level 141 upon arrival at the respective ONUs 131, 132, 133, which affects channel quality. The optical power level of the downstream optical signal that remains upon arrival at an ONU may further be referred to as 'received power level at the ONU' 142. Each ONU 131, 132, 133 is characterized by an ONU receiver sensitivity. The ONU receiver sensitivity refers to the minimum optical power level 143 required by the ONU's receiver to reliably detect and demodulate incoming optical signals. It represents the ability of the ONU to detect weak signals amidst noise and other impairments in the optical network. The difference between the received power level 142 at an ONU and the ONU receiver sensitivity 143 may be referred to as the downstream optical power margin 144, also margin, power margin, power budget, or optical link margin. It will be apparent that the downstream optical power margin 144 may be different at the respective ONUs 131, 132, 133, as the respective ONUs may have different ONU receiver sensitivities and that the received power level at the respective ONUs may vary.

The downstream optical power margin 144 in a PON is thus a measure of the difference between the optical power level $P_{RX,ONU}$ 142 received by an ONU 131, 132, 133 and its ONU receiver sensitivity $P_{RX,ONU}^{min}$ 143, i.e.

$$Margin = P_{RX,ONU} - P_{RX,ONU}^{min}$$. The optical power level $P_{RX,ONU}$ 142 received by an ONU 131, 132, 133 is determined by the transmitted optical power level $P_{TX,OLT}$ 141 and the optical power losses in the ODN, i.e. $P_{RX,ONU}$ = $P_{TX,OLT}$ - $Losses_{ODN}$. As such, the downstream optical power margin 144 is also related to or determined by the transmitted optical power level as follows:

$$Margin = P_{TX,OLT} - Losses_{ODN} - P_{RX,ONU}^{min}$$. It will be apparent that this is an illustrative example and that the optical power levels can also be expressed as an average power level or as an optical modulation amplitude.

A margin 144 is typically provided to account for various losses and impairments that can occur in the optical fibre link 120. The margin 144 ensures that the power level of the optical signal 151 remains above the receiver sensitivity threshold 143 under various operating conditions, including temperature variations, aging of optical components, and other environmental factors. In doing so, a minimum channel quality can be guaranteed for maintaining the network's reliability and performance under various operating conditions.

Network operators typically plan and design the deployment of the ODN 120 to optimize cost while meeting some performance constraints, e.g. covering all homes in an operational area, maximizing the number of homes connected to the ODN, minimizing the number of ODNs, limiting the maximum number of homes connected to the ODN to limit oversubscription, and balancing the loss budget of all homes. Predicting these constraints accurately before deployment of the ODN is a challenge as the PON may end up being used differently than expected thereby changing the constraints the PON was designed for. For example, the number of homes that end up connecting to the ODN can be less than expected or component specifications may differ from their nominal values.

As such, excess downstream power margins 147 are typically present in PONs 100. In other words, the available downstream optical power margin 144 may comprise an excess portion 147 which is not needed to maintain the network's reliability and performance under various operating conditions, i.e. portion 146 would be sufficient for maintaining the network's reliability and performance. Thus, OLT 110 is transmitting optical downstream signals 115 at a transmission power level that is higher than required to maintain the network's reliability and performance, thereby consuming futile and excessive energy.

In an attempt to reduce excess downstream power margins and power consumption, network operators could select OLT optics of a certain optical budget class with the lowest optical output power that still meet the constraints of the ODN. Each optical budget class has a predetermined optical output power, e.g. optical budgets classes N1, N2, and E2 in XGS-PON. This selection could be performed before the PON is put in service. During service, if the margin 144 turns out to be insufficient or excessive, the network operator could manually swap the OLT optics to another budget class. This has the problem that it is labour intensive, costly, it cannot be performed without disrupting service on the PON, and only a limited set of optical budget classes are typically available for the OLT optics that have fixed optical output power increments.

To solve or at least alleviate these problems and challenges, OLT 110 comprises a controller 112 according to embodiments of the present disclosure. The controller 112 is configured to adjust the power consumption of the OLT 110 while the OLT is in service by adjusting one or more of the transmitter settings 145 while respecting minimal channel qualities of the downstream optical signal 115 between the OLT and the respective ONUs 131, 132, 133. Adjusting the transmitter settings 145 of the transmitter circuitries 111 can result in a change of the transmitted optical power level $P_{TX,OLT}$ 141 by the OLT 110. For example, the transmitter settings 145 can be adjusted such that the optical power level transmitted by the OLT 110 is lowered from level 141 to level 145. As a result, the optical power of the downstream optical signal throughout the ODN will change from 151 to 152. The optical power received at an ONU will thus decrease, thereby reducing the downstream optical power margin 144 by at least a portion of the excess margin 147.

The one or more transmitter circuitries 111 may, for example, include a laser diode, a semiconductor optical amplifier, adjustable OLT optics, an equalizer circuitry, a thermo-electric cooler, a digital signal processor, or an optical modulator. The one or more transmitter settings 145 that are adjusted by controller 112 may include a transmission power level of the downstream optical signal, a driver swing, an enabled or disabled state of an equalizer circuitry, adjustable settings of a thermo-electric cooler, adjustable settings of a digital signal processor, and/or the optical modulation amplitude of an optical modulator. Adjusting the transmission power level may, for example, be achieved by adjusting the bias of a laser diode of the OLT optical transmitter, the bias of a semiconductor optical amplifier to adjust its gain, or the bias of the entire OLT optics. It will be apparent that adjusting some transmitter settings may not affect the transmission power level but may still affect the OLT power consumption and the channel qualities. For example, enabling or disabling the transmitter equalizer circuitry.

By adjusting the transmitter settings 145 while respecting the minimal channel qualities, the power consumption of the OLT can be reduced without substantially affecting the channel quality between the OLT 110 and the respective ONUs 131, 132, 133. This is achieved while the OLT 110 is in service, i.e. without disrupting the service of the PON. This has the advantage that it is cost-effective and does not require substantial labour, e.g. compared to manually swapping the OLT optics to another budget class. It is a further advantage that the downstream margin can be reduced in a more modular manner which improves the adaptability of the OLT power consumption, as adjustments are not limited to a set of predetermined increments/decrements in optical output power associated with the different optical budget classes. It is a further advantage that power savings can be increased beyond the power savings provided by selecting the lowest available optical budget class. It is a further advantage that downstream margins can be adjusted without adjusting the upstream margins, contrary to changing OLT optics. This can especially be advantageous where a large discrepancy in the margins is present in the upstream and downstream.

Controller 112 may be configured to adjust one or more of the transmitter settings 145 based on PON deployment information 113 indicative for the channel quality of one or more channels between the OLT 110 and the respective ONUs 131, 132, 133. PON deployment information 113 may include information related to the optical power losses incurred by an optical downstream signal 115 within the ODN 120, information related to the ONU receiver sensitivities within the PON 100, information related to a topology or configuration of the PON 100, or other information that has an effect on the channel quality between the OLT 110 and one or more of the ONUs 131, 132, 133. In other words, the channel quality between the OLT 110 and an ONU 131, 132, 133 is at least partially determined by the PON deployment information 113, i.e. channel quality is a function of PON deployment information 113.

The PON deployment information 113 can allow the controller 112 to estimate or approximate the downstream optical power margin 144 at one or more ONUs 131, 132, 133. The controller 112 may then, for example, adjust one or more of the transmitter settings 145 to reduce the downstream optical power margins 144, thereby reducing the power consumption of the OLT 110.

PON deployment information 113 may be provided to the controller as a manual input, e.g. by a network operator. This may be referred to as a static configuration of the transmitter settings 145, as the one or more transmitter settings 145 are only adjusted by the controller 112 when obtaining PON deployment information 113 as a manual input. For example, when the PON is first deployed or when an update of the margins 144 is desired due to changes in the PON 100.

It will be apparent that the network operator may provide a minimum margin to controller 112 for maintaining the network's reliability. This avoids that the margins 144 are lowered too much by controller 112 which would leave no buffer for compensating the aging of the ODN, temperature variations in the ODN, or disturbances in the ODN. This minimum margin may, for example, be margin 146. The minimum margin may for example be provided as a maximum BER threshold.

The manually inputted PON deployment information 113 may, for example, be a measured optical power of a downstream optical signal received at one or more ONUs 131, 132, 133, e.g. optical power level 142. Such measurement may, for example, be obtained by a network operator or a field technician and subsequently be provided to controller 113. The manual input of PON deployment information 113 may further be, for example, the ONU receiver sensitivity 143, one or more bit error rates, BERs, of the respective ONUs, one or more signal-to-noise ratios, SNRs, of the respective ONUs, and/or an optical power of an upstream optical signal received at the OLT. Alternatively or complementary, the manual input of PON deployment information 113 may include properties of the ODN 120 such as, for example, a split factor or a fibre reach.

Additional information may be included in the PON deployment information such as, for example, one or more ONU receiver sensitivities and/or the transmission power level of an upstream optical signal transmitted by an ONU. Alternatively, such additional information may already be available to controller 112. This can allow the controller 112 to estimate the downstream power margin 144.

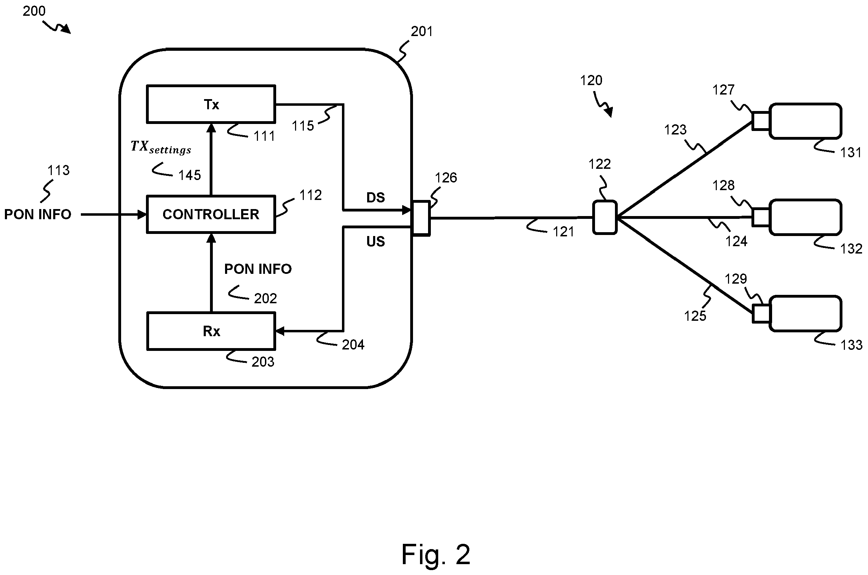

Fig. 2 shows an example embodiment of an OLT 201 comprising a controller 112 configured to adaptively adjust the one or more transmitter settings 145 based on reported PON deployment information 202, i.e. upstream reports received from the ONUs 131, 132, 133. This PON deployment information 202 may, for example, be included within upstream optical signals 204 transmitted from the ONUs 131, 132, 133 to the OLT 201. The PON deployment information 202 may, for example, be provided to the controller by an OLT receiver 203. To this end, controller 112 may be configured to track and update PON deployment information 202. The controller 112 may, for example, be configured to request updated PON deployment information 202 from the respective ONUs or identify a change in PON deployment information. This may be referred to as a quasi-static configuration of the transmitter settings or as a dynamic configuration of the transmitter settings, as the controller 112 may be configured to automatically adapt the one or more transmitter settings 145 based on the latest PON deployment information 202, 113 that is obtained.

The reported PON deployment information 202 may, for example, be one or more reported optical powers of a downstream optical signal received at the respective ONUs 131, 132, 133. A respective ONU 131, 132, 133 can thus determine or measure the optical power of a received downstream optical signal and report it as feedback to the controller, e.g. by including the measurement in an upstream optical signal 204 to the OLT. This can allow the controller 112 to estimate the downstream optical power margin, e.g. combined with knowledge of the ONU receiver sensitivity. The ONU receiver sensitivity may, for example, also be reported within the upstream optical signals. Alternatively, it may be stored in an accessible memory of the controller or may be provided as a manual input 113 by a network operator.

Alternatively or complementary, the reported PON deployment information 202 may, for example, be reported bit error rates, BERs, of the respective ONUs 131, 132, 133. A respective ONU 131, 132, 133 can thus determine the BER of a received downstream optical signal and report it as feedback to the controller 112, e.g. by including the measurement in an upstream optical signal 204 to the OLT. The controller 112 can estimate or determine the downstream optical power margin at an ONU based on the reported BER at said ONU. Alternatively, the controller may adjust the one or more transmitter settings based on the reported BER and a configured maximum BER value, i.e. without effectively determining the margin. In a similar manner, the reported PON deployment information may also be a reported signal to noise ratio, SNR, or another metric indicative for channel quality.

Alternatively or complementary, the reported PON deployment information 202 may, for example, be an optical power of an upstream optical signal received at the OLT. To this end, the OLT or the controller may be configured to determine or measure the optical power of a received upstream optical signal from one or more ONUs 131, 132, 133. The optical power of an upstream optical signal received at the OLT 201 can allow the controller 112 to estimate the power losses in the ODN 120, e.g. combined with knowledge of the transmission power level of the upstream optical signal at the ONU. This transmission power level may, for example, also be included within the upstream optical signals. Alternatively, it may be stored in an accessible memory of the controller or may be provided as a manual input by a network operator.

Dynamic configuration of the transmitter settings allows reducing the downstream optical power margins more compared to static configuration of the transmitter settings. Only a limited margin, or even no margin, has to be kept for maintaining the network's reliability and performance under various operating conditions as the PON deployment information, and thus the margin 144, is adaptively updated. In other words, the portion of the margin available for power reduction, e.g. excess portion 147, may be substantially larger under dynamic configuration of the transmitter settings compared to static configuration of the transmitter settings. The excess portion 147 may even be equal to the entire available margin 144 under dynamic configuration of the transmitter settings. In other words, margin 144 may be reduced to an extent that it just satisfies the minimal channel qualities. Dynamic configuration of the transmitter settings can thus further increase the power savings of the OLT. This has the further advantage that it requires no manual intervention from a network operator.

It will further be apparent that controller 112 may, in addition to adaptively updating the PON deployment information, also receive PON deployment information 113 as a manual input as discussed in relation to Fig. 1, e.g. at initial start-up of the PON 200.

Controller 112 may further be configured to adjust one or more transmitter settings 145 such that a lowest channel quality between the OLT and an ONU within the PON is equal to a predetermined channel quality. This can, for example, be achieved by adjusting transmitter settings such that the lowest downstream optical power margin between the OLT 201 and the ONUs 131, 132, 133 within the PON 200 is equal to a predetermined margin. This may be implemented by adjusting the transmitter settings such that the highest downstream BER at the ONUs within the PON is equal to a predetermined BER threshold. The predetermined margin may be a minimum margin for maintaining the network's reliability and performance under various operation conditions, e.g. aging of the ODN, temperature variations in the ODN, or disturbances in the ODN. The controller 112 may thus be configured to set one or more transmitter settings 145 such that the downstream optical power margin at the ONU with the smallest margin within the PON has a preset value. This allows saving a maximum amount of power consumption of the OLT while ensuring that each ONU in the PON receives the downstream optical signal at a sufficient power level, i.e. at a sufficient channel quality, to maintain the required reliability and performance in the network.

Controller 112 may further be configured to identify transmitter settings 145 that result in a target reduction in the channel qualities and/or power consumption of the OLT by iteratively adjusting the one or more transmitter settings 145 and by monitoring the PON deployment information 202.

The adjusting may be performed, for example, according to fixed decrements, fixed increments, according to a golden bisection algorithm, or by means of reinforcement learning. The target reduction may, for example, be a desired reduction in power consumption, a desired power consumption, or a desired channel quality. The target reduction may be defined quantitatively, e.g. a specific BER value indicating the channel quality or a specific power level in dB. Alternatively, the target reduction may correspond to optimizing the performance and power consumption of the OLT, i.e. without quantitatively defining a target reduction. This can, for example, be achieved by gradually adjusting one or more transmitter settings until a lower limit is reached for a channel quality metric of any ONU in the PON, e.g. a reported BER of the ONUs. In doing so, a maximum power can be saved while maintaining the minimum channel quality.

It will further be apparent that, irrespective of whether a static configuration of the transmitter settings is performed or a dynamic configuration of the transmitter settings is performed, it is preferred that the adjustment or modulation of the transmitter setting occurs gradually, i.e. without substantial increments or decrements. In other words, a sudden substantial change in transmitter settings may preferably be avoided to allow the ONUs 131, 132, 133 to track the changing downstream optical signals without loss of signal. For example, when adjusting the bias of a laser diode, a time constant of at least 1ms between adjustments can avoid impact on most common control loops in ONUs 131, 132, 133.

The reduced downstream optical power margin may not be sufficient to allow unsynchronized ONUs to perform activation to join the PON 200. To this end, the controller 112 may further be configured to adjust one or more transmitter settings 145 as to temporarily increase the downstream optical power margins during an interval. This can allow unsynchronized ONUs to perform activation during the interval. Such an interval may be initiated by the controller 112, for example, upon preregistration of a newly installed ONU, upon predetermined moments during the day, at predetermined intervals, after an already registered ONU drops out to ensure resyncing, and/or after a rogue ONU has been detected. The controller 112 may further be configured to update the PON deployment information, and thus the transmitter settings 145, after each interval because new ONUs may have joined the network. In case of a static configuration of the transmitter settings, the network operator will have to provide the updated PON deployment information to the controller 112 as manual input in order to achieve optimal power savings. Alternatively or complementary, the controller may initiate such an interval when a failure event, e.g. drop-out of an ONU, is expected to occur in the near future.

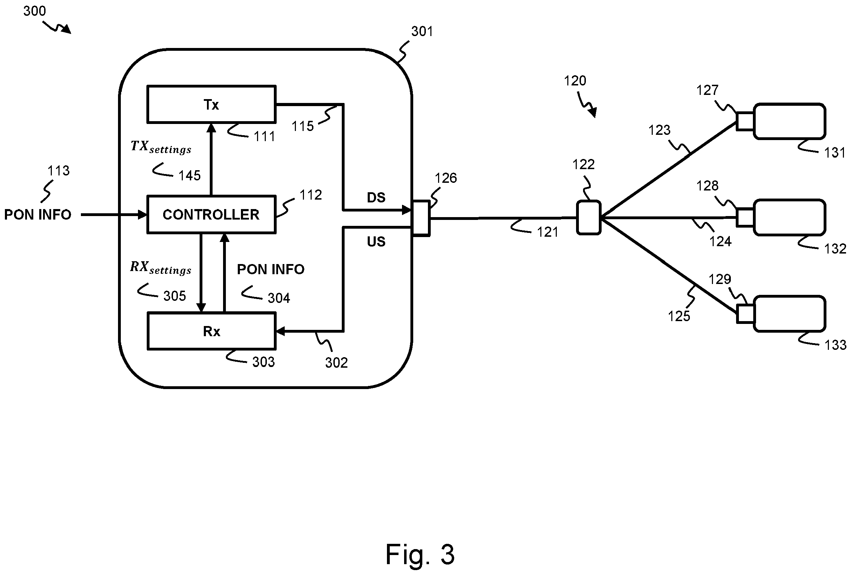

Fig. 3 shows an example embodiment of an OLT 301 that comprises one or more receiver circuitries 303 configured to receive upstream optical signals 302 from the respective ONUs 131, 132, 133 according to receiver settings 305 that determine the upstream optical power margins. OLT 301 comprises a controller 112 that is further configured to adjust the power consumption of the OLT by adjusting one or more receiver settings 305 of the receiver circuitries 303 while respecting minimal channel qualities of the upstream optical signals between the respective ONUs and the OLT. In doing so, the power consumption of the OLT can be reduced without negatively affecting the upstream channel quality between the respective ONUs 131, 132, 133 and the OLT 301 as at least a minimum upstream channel quality can be maintained. It is an advantage that this can be achieved without disrupting the service of the PON.

The one or more receiver circuitries 303 may, for example, be circuitries within an optical receiver or an optical transceiver of the OLT 301 that are configured to receive and decode upstream optical signals 302. The receiver circuitries may, for example, be a semiconductor optical amplifier, a transimpedance amplifier, an equalizer circuitry, and a decoder circuitry. Adjusting the receiver settings 305 may include reducing the maximum semiconductor optical amplifier gain, reducing transimpedance amplifier power consumption, and disabling or enabling equalization. Adjusting the receiver settings may be performed in between upstream optical bursts or can be done substantially gradual.

It will be apparent that an OLT can be provided with a controller 112 only configured to adjust the transmitter settings as discussed in relation to Fig. 1 and Fig. 2; that an OLT can be provided with a controller 112 only configured to adjust the receiver settings; or that an OLT can be provided with a controller configured to reduce both the downstream and upstream optical power margins as discussed in relation to Fig. 3. The latter can allow maximizing the power savings of an OLT.

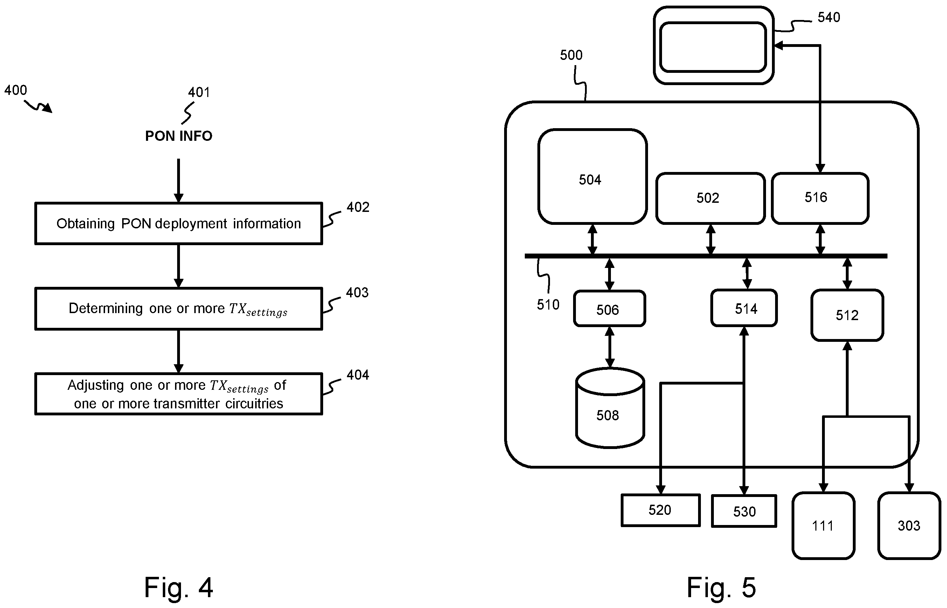

Fig. 4 shows steps 400 according to an example embodiment of a computer-implemented method for reducing the power consumption of an OLT. Steps 400 may for example be performed by controller 112. In a first step 402, PON deployment information 401 indicative for the channel quality of one or more channels between the OLT and the respective ONUs is obtained. This PON deployment information 401 may be obtained as a manual input as discussed in relation to Fig. 1, e.g. from a network operator, and/or as reported input as discussed in relation to Fig. 2.

In a following step 403, one or more transmitter settings may be determined as to adjust the power consumption of the OLT while respecting minimal channel qualities of the downstream optical signal. This is based on the obtained PON deployment information 401. In a next step 404, the one or more transmitter settings are adjusted by, for example, providing one or more control signals to the respective one or more transmitter circuitries.

Fig. 5 shows a suitable computing system 500 enabling to implement embodiments of the computer-implemented method for reducing power consumption of an OLT. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with one or more transmitter circuitries 111 and/or one or more receiver circuitries 303. The communication interface 512 of computing system 500 may be connected to such a source node or destination node by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, ROM, disk, solid state drives, flash memory cards, etc. could be used. Computing system 500 could thus correspond to the controller 113 of OLT 110, 201, or 301.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

As used in this application, the term "circuitry" may refer to one or more or all of the following: (a) hardware-only circuit implementations (such as implementations in only analogue and/or digital circuitry and/or optical circuitry) and (b) combinations of hardware circuits and software, such as (as applicable): (i) a combination of analogue and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

## Claims

1. An optical line terminal (110), OLT, configured to communicate with optical network units (131, 132, 133), ONUs, by means of an optical distribution network (120), ODN, in a passive optical network (100), PON; wherein the OLT comprises one or more transmitter circuitries (111) configured to transmit a downstream optical signal (115) to the ONUs according to transmitter settings that determine a power consumption of the OLT; and wherein the OLT further comprises a controller (112) configured to adjust the power consumption of the OLT by adjusting one or more of the transmitter settings (145) while respecting minimal channel qualities of the downstream optical signal between the OLT and the respective ONUs.

2. The optical line terminal, OLT, according to claim 1, wherein the controller (112) is further configured to adjust the power consumption of the OLT while the OLT is in service.

3. The optical line terminal, OLT, according to any of the preceding claims, wherein the controller (112) is further configured to adjust one or more of the transmitter settings (145) based on PON deployment information (113, 202, 304) indicative for the channel quality of one or more channels between the OLT and the respective ONUs.

4. The optical line terminal, OLT, according to claim 3, wherein the controller (112) is further configured to obtain PON deployment information as a manual input (113) and/or as a reported input (202, 304) from the respective ONUs.

5. The optical line terminal, OLT, according to claim 3 or 4, wherein the PON deployment information (113, 202, 304) includes one or more optical powers of a downstream optical signal at one or more ONUs; one or more properties of the ODN; one or more bit error rates, BERs, of the respective ONUs; one or more signal-to-noise ratios, SNRs, of the respective ONUs; and/or an optical power of an upstream optical signal received at the OLT.

6. The optical line terminal, OLT, according to any of claims -3 - 5, wherein the controller (112) is further configured to track and update PON deployment information (113, 202, 304).

7. The optical line terminal, OLT, according to claim 6, wherein the controller (112) is further configured to identify transmitter settings (145) that result in a target channel quality for a lowest channel quality between the OLT and an ONU within the PON and/or a target power consumption of the OLT by iteratively adjusting the one or more transmitter settings (145) and by monitoring the PON deployment information (202, 304).

8. The optical line terminal, OLT, according to claim 6, wherein the controller (112) is configured to adjust one or more transmitter settings (145) such that a lowest channel quality between the OLT and an ONU within the PON is equal to a predetermined channel quality.

9. The optical line terminal, OLT, according to any of the preceding claims, wherein adjusting one or more transmitter settings (145) comprises at least one of adjusting a bias of a laser diode; adjusting a bias of a semiconductor optical amplifier, adjusting a bias of OLT optics; adjusting a transmission power level of the downstream optical signals; adjusting an operational state of an equalizer circuitry; adjusting a driver swing; and/or adjusting an optical modulation amplitude of an optical modulator circuitry.

10. The optical line terminal, OLT, according to any of the preceding claims, wherein the controller (112) is further configured to adjust one or more transmitter settings (145) as to temporarily increase downstream optical power margins (144) during an interval.

11. The optical line terminal, OLT (301), according to any of the preceding claims, wherein the OLT further comprises one or more receiver circuitries (303) configured to receive upstream optical signals (302) from the respective ONUs according to receiver settings (303) that determine the power consumption of the OLT; and wherein the controller (112) is further configured to adjust the power consumption of the OLT while the OLT is in service by adjusting one or more of the receiver settings (305) while respecting minimal channel qualities of the upstream optical signals between the respective ONUs and the OLT.

12. An optical line terminal, OLT, configured to communicate with optical network units, ONUs, by means of an optical distribution network, ODN, in a passive optical network, PON; wherein the OLT comprises one or more receiver circuitries configured to receive upstream optical signals from the respective ONUs according to receiver settings that determine the power consumption of the OLT; and wherein the OLT further comprises a controller configured to adjust the power consumption of the OLT while the OLT is in service by adjusting one or more of the receiver settings while respecting minimal channel qualities of the upstream optical signals between the respective ONUs and the OLT.

13. A computer-implemented method (400) for reducing power consumption of an OLT (100), wherein the OLT is configured to communicate with optical network units (131, 132, 133), ONUs, by means of an optical distribution network (120), ODN, in a passive optical network (100), PON; wherein the OLT comprises one or more transmitter circuitries (111) configured to transmit a downstream optical signal (115) to the ONUs according to transmitter settings that determine a power consumption of the OLT; the computer-implemented method comprising, while the OLT is in service:

   - Obtaining (402) PON deployment information (401) indicative for the channel quality of one or more channels between the OLT and the respective ONUs; and
   - Adjusting (404), based on the PON deployment information, one or more transmitter settings that adjust the power consumption of the OLT while respecting minimal channel qualities of the downstream optical signal between the OLT and the respective ONUs.

14. A data processing system configured to perform the computer-implemented method according to claim 13.

15. A computer program product comprising computer-executable instructions which, when the program is executed by a computer, cause the computer to perform the computer-implemented method according to claim 13.

Fig. 1

EP 4 611 277 A1

Fig. 2

Fig. 3

EP 4 611 277 A1

Fig. 5

PON INFO

Obtaining PON deployment information

Determining one or more $TX_{settings}$

Adjusting one or more $TX_{settings}$ of one or more transmitter circuitries

Fig. 4

| | Europäisches Patentamt European Patent Office Office européen des brevets | **EUROPEAN SEARCH REPORT** | **Application Number** EP 24 16 0706 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/134687 A1 (ZTE CORP [CN]) 11 July 2019 (2019-07-11) * paragraphs [0028] - [0030] * * paragraph [0040] * * paragraphs [0049] - [0055] * | 1-15 | INV. H04B10/079 H04B10/272 H04Q11/00 |
| X | US 2024/063919 A1 (WEY JUN SHAN [CN] ET AL) 22 February 2024 (2024-02-22) * paragraph [0009] * * paragraph [0074] * * claims 1-8 * | 1-15 | |
| X | WO 2013/076780 A1 (MITSUBISHI ELECTRIC CORP [JP]; OKADA KAZUNORI [JP]) 30 May 2013 (2013-05-30) * the whole document * | 1-10, 13-15 | |
| X | JP 2022 137102 A (HUAWEI TECHNOLOGIES CO., LTD.) 21 September 2022 (2022-09-21) * paragraph [0008] * * paragraph [0012] * * paragraphs [0159] - [0161] * | 12 | **TECHNICAL FIELDS SEARCHED (IPC)** H04B H04Q |

The present search report has been drawn up for all claims

| Place of search | Date of completion of the search | Examiner |
|---|---|---|
| Munich | 22 July 2024 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 16 0706

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2024

| Patent document cited in search report | Publication date | Patent family member(s) | | Publication date |
|---|---|---|---|---|
| WO 2019134687 A1 | 11-07-2019 | NONE | | |
| US 2024063919 A1 | 22-02-2024 | CN | 113545007 A | 22-10-2021 |
| | | EP | 3939205 A1 | 19-01-2022 |
| | | US | 2021409125 A1 | 30-12-2021 |
| | | US | 2024063919 A1 | 22-02-2024 |
| | | WO | 2020181549 A1 | 17-09-2020 |
| WO 2013076780 A1 | 30-05-2013 | NONE | | |
| JP 2022137102 A | 21-09-2022 | AR | 114317 A1 | 19-08-2020 |
| | | CN | 110086545 A | 02-08-2019 |
| | | CN | 113472450 A | 01-10-2021 |
| | | EP | 3737006 A1 | 11-11-2020 |
| | | EP | 4258682 A2 | 11-10-2023 |
| | | ES | 2959401 T3 | 26-02-2024 |
| | | JP | 7096364 B2 | 05-07-2022 |
| | | JP | 7444925 B2 | 06-03-2024 |
| | | JP | 2021511759 A | 06-05-2021 |
| | | JP | 2022137102 A | 21-09-2022 |
| | | KR | 20200111214 A | 28-09-2020 |
| | | KR | 20220148312 A | 04-11-2022 |
| | | TW | 201933806 A | 16-08-2019 |
| | | US | 2020350992 A1 | 05-11-2020 |
| | | US | 2022255624 A1 | 11-08-2022 |
| | | WO | 2019144650 A1 | 01-08-2019 |